# EUROPÄISCHE PATENTSCHRIFT

(11) **EP 3 554 882 B1**
(45) Veröffentlichungstag und Bekanntmachung des Hinweises auf die Patenterteilung: **16.09.2020**
(21) Anmeldenummer: 17829925.1
(22) Anmeldetag: 23.11.2017
(51) Int. Cl.: B60K 35/00, B60K 37/06, G05G 1/10, H01H 9/18, H01H 19/02, H01H 19/00, G05G 1/08, G06F 3/0362, G06F 3/0487, G06F 1/16, G06F 3/0488, G06F 3/01, G06F 3/0484

(54) **BEDIENVORRICHTUNG MIT EINEM BEDIENKNAUF**
OPERATING DEVICE HAVING AN OPERATING KNOB
DISPOSITIF DE COMMANDE COMPRENANT UN BOUTON DE COMMANDE

(30) Priorität: 16.12.2016 DE 102016225232
(43) Veröffentlichungstag der Anmeldung: 23.10.2019
(73) Patentinhaber: Audi AG, 85045 Ingolstadt (DE)
(72) Erfinder: HÉLOT, Jacques, 85051 Ingolstadt (DE); MERTENS, Joris, 85051 Ingolstadt (DE); REDEKER, Immo, 85051 Ingolstadt (DE)
(86) Internationale Anmeldenummer: PCT/EP2017/080212
(87) Internationale Veröffentlichungsnummer: WO 2018/108480

(56) Entgegenhaltungen:
- EP-A2- 2 251 762
- WO-A1-03/050754
- CN-U- 205 775 388
- DE-A1-102015 223 450
- DE-B3-102014 016 328

## Beschreibung

Die Erfindung betrifft eine Bedienvorrichtung mit einem Bedienknauf. Der Bedienknauf kann beispielsweise als Drehknauf ausgestaltet sein, wie er beispielsweise in einem Kraftfahrzeug zum Einstellen einer Temperatur oder Lautstärke bekannt ist.

Aus dem Stand der Technik bekannte Bedienknaufe können beispielsweise als Drehknauf in der beschriebenen Weise für eine Drehregelung vorgesehen sein oder aber auch beispielsweise als Griffstück zum Schieben für einen Schieberegler oder als Aufsatz zum Auflegen einer Fingerkuppe auf eine Taste. Mit Bedienknauf ist somit ein Griffstück oder Berührstück gemeint, welches zum Erfassen einer Drehbewegung oder Schubbewegung oder Drückbewegung eines Fingers vorgesehen ist. Bedienknaufe sind in der Regel aus einem Kunststoffkörper hergestellt, der mit einer Gummierung zur Verbesserung der Griffigkeit überzogen sein kann. Um einem Benutzer eine Orientierung über die aktuelle Drehstellung oder allgemein den aktuell eingestellten Parameterwert zu geben, kann ein Bedienknauf mit Markierungen bedruckt sein. Diese visuellen Markierungen sind allerdings permanent und auf eine einzige Anwendung des Bedienknaufs abgestimmt, beispielsweise das Einstellen der Lautstärke oder Temperatur.

Das Dokument WO 03/050754 A1 offenbart ein Anzeigesystem, das einen Anzeigebildschirm zum Anzeigen einer grafischen Darstellung aufweist: Die Oberfläche des Anzeigebildschirms weist ein Relief auf, um dem Benutzer taktile und/oder visuelle Führung anzubieten.

Das Dokument DE 10 2014 016328 B3 offenbart Verfahren zum Betreiben einer Anzeigevorrichtung eines Kraftwagens, mit den Schritten: Vorgeben zumindest eines Anzeigebereichs innerhalb einer berührungssensiblen und flexiblen Anzeige der Anzeigevorrichtung, Verformen der Anzeige derart, dass der vorgegebene Anzeigebereich gekrümmt wird, wobei ein erster Teil der Anzeige in Richtung eines zweiten Teil der Anzeige gebogen und dadurch der zwischen den beiden Teilen der Anzeige angeordnete Anzeigebereich in Form einer Biegekante ausgebildet wird, ein Bedienelement einer graphischen Benutzeroberflache mittels der Anzeige in dem vorgegebenen gekrümmten Anzeigebereich angezeigt wird.

Das Dokument CN 205 775 388 U offenbart ein System einer Waschmaschine mit einem Hauptsteuerelement und einem Anzeigemodul.

Das Dokument EP 2 251 762 A2 offenbart eine Bedienvorrichtung für ein Elektrogerät, die eine Bedieneinheit als Drehregler aufweist, die an einer Blende bzw. Auflagefläche des Elektrogeräts drehbeweglich und abnehmbar gehaltert ist. An der Oberseite der Bedieneinheit sind mehrere kapazitive Berührungsschalter als Schaltmittel und mindestens eine Anzeige vorgesehen. Die Oberseite ist im Wesentlichen lichtdurchlässig im Bereich des Berührungsschalters und der Anzeige und kann von einer Deckscheibe aus Mineralglas gebildet sein.

Das Dokument DE 10 2015 223450 A1 offenbart eine Berührungseingabeeinrichtung, die auf einer Montagefläche installiert ist und eine Außenfläche, die von der Montagefläche ansteigt; einen Kantenteil, der an einer Oberseite der Außenfläche vorgesehen ist; und eine Innenfläche, die von dem Kantenteil abfällt, enthält, wobei der Kantenteil zum Empfangen eines Berührungssignals eines Benutzers vorgesehen ist.

Der Erfindung liegt die Aufgabe zugrunde, einen Bedienknauf in einer Bedienvorrichtung universell einsetzbar zu machen.

Die Aufgabe wird durch die Bedienvorrichtung gemäß dem Patentanspruch 1 gelöst. Vorteilhafte Weiterbildungen der Erfindung sind durch die abhängigen Patentansprüche, die folgende Beschreibung sowie die Figuren beschrieben.

Die Erfindung sieht eine Bedienvorrichtung mit einem Bedienknauf vor, d.h. einem Knopf oder 3D-Bedienelement zum Greifen oder Fassen mit den Fingern. Der Bedienknauf erstreckt sich also als ein dreidimensional erhobener Körper und weist insgesamt eine Knaufhöhe auf. Die Knaufhöhe bemisst sich von einer Bezugsebene, die man sich an einer Rückseite des Bedienknaufs denken kann und die den Bedienknauf zur Rückseite hin begrenzt. Von dieser Rückseite erstreckt sich der Bedienknauf bis zu der Knaufhöhe, wo sich dann die Vorderseite des Bedienknaufs befindet. Der Bedienknauf weist eine sich zwischen der Bezugsebene und der Knaufhöhe senkrecht oder zumindest in einem Winkel größer als 20°, insbesondere größer als 45°, erstreckende Seitenwand auf. Diese Seitenwand dient in der bekannten Weise als Anlagefläche für zumindest einen Finger, mit welchem ein Benutzer den Bedienknauf greifen oder berühren kann. Die Knaufhöhe ist hierzu bevorzugt größer als 2mm, insbesondere größer als 0,5cm oder größer als 1cm, um eine mit Fingerkuppen zumindest fühlbare Struktur, insbesondere einen greifbaren oder umschließbaren Knauf oder Knopf zu erhalten. Erfindungsgemäß ist nun vorgesehen, dass diese Seitenwand mehrere Leuchtausgänge zumindest eines Leuchtsegments oder einer Pixelmatrix aufweist. Ein Leuchtsegment kann eine Leuchtform darstellen, indem das Leuchtsegment im eingeschalteten Zustand Licht emittiert. Die Leuchtform des Leuchtsegments stellt dabei ein fertiges, an der Seitenwand darzustellendes, selbstleuchtendes Symbol dar. Die Leuchtform eines Leuchtsegments ist somit konstant oder nicht steuerbar. Eine Pixelmatrix ist dagegen eine Anordnung aus mehreren Leuchtpixeln, die einzeln, unabhängig voneinander angesteuert werden können, sodass eine Leuchtform durch Ansteuern einiger der Leuchtpixel festgelegt werden kann. Die Leuchtform oder das selbstleuchtende Symbol ist somit in der Form einstellbar. Die Leuchtausgänge stellen jeweils einen Austrittsbereich für das Licht eines Leuchtsegment oder der Pixelmatrix aus dem Bedienknauf dar. Der Bedienknauf kann beispielsweise zylinderförmig oder kegelstumpfförmig ausgestaltet sein. Die Mantelfläche des Zylinders oder des Kegelstumpfs stellt dann die besagte Seitenwand dar. An dieser Seitenwand kann nun eine Leuchtform oder ein selbstleuchtendes Symbol oder Muster mittels eines Leuchtsegment oder eines Pixelmusters angezeigt oder ausgegeben oder dargestellt werden.

Durch die Erfindung ergibt sich der Vorteil, dass ein Erscheinungsbild des Bedienknaufs durch Ein- und Ausschalten des zumindest einen Leuchtsegments oder Leuchtpixeln der Pixelmatrix eingestellt werden kann.

Zu der Erfindung gehören auch optionale Weiterbildungen, durch deren Merkmale sich zusätzliche Vorteile ergeben.

Erfindungsgemäß ist eine Pixelmatrix vorgesehen und die Pixelmatrix ist dazu eingerichtet, ein durch Pixeldaten vorgebbares Pixelmuster an der Seitenwand darzustellen. Somit kann z.B. eine animierte oder zeitlich veränderliche selbstleuchtende Leuchtform oder ein entsprechendes Symbol dargestellt werden.

Der Bedienknauf kann als ein Einzelteil zum Einbauen in ein Bediengerät, beispielsweise in ein Kraftfahrzeug, vorgesehen oder ausgestaltet sein. Erindungsgemäß ist vorgesehen, dass die besagte Bezugsebene an der Rückseite des Bedienknaufs durch eine den Bedienknauf umgebende Außenoberfläche eines pixelbasierten Bildschirms gebildet ist. Mit anderen Worten ist der Bedienknauf auf einen Bildschirm aufgesetzt oder in diesen integriert. Der Bedienknauf ist also von der Pixelmatrix des Bildschirms umgeben. Hierdurch ergibt sich der Vorteil, dass eine durchgehende, schlüssige Pixelgrafik dargestellt werden kann, die sich von der Seitenwand bis auf den Bildschirm erstreckt. Beispielsweise können Orientierungslinien oder Orientierungssymbole dargestellt werden, die von der Seitenwand bis in den Darstellungsbereich des Bildschirms reichen oder sich erstrecken.

Erfindungsgemäß ist auch vorgesehen, dass der Bildschirm und der daran angeordnete Bedienknauf einstückig ausgestaltet sind. Hierzu ist bevorzugt vorgesehen, dass die Außenoberfläche des Bildschirms auf der Grundlage einer Scheibe bereitgestellt ist, beispielsweise einer Glasscheibe oder eine Kunststoffscheibe, und auch die Seitenwand des Bedienknaufs ebenfalls auf der Grundlage dieser Scheibe bereitgestellt ist, indem die Scheibe im Bereich des Bedienknaufs eine Ausbuchtung aufweist, die den Bedienknauf bildet oder darstellt. Die Scheibe weist also eine Ausbuchtung auf, die mit den Fingern umfasst werden kann. Beispielsweise kann die Scheibe durch Tiefziehen in der Weise ausgebuchtet sein, dass sich die 3D-Form des Bedienknaufs über die Ebene des pixelbasierten Bildschirms erstreckt oder erhebt. Die elektronische Pixelmatrix des Bildschirms selbst kann zusätzlich zu der Scheibe selbst ebenfalls ausgebuchtet sein, sodass also eine Pixelgrafik mit dem Pixelmuster im Bereich der Seitenwand einfach mittels der Pixelmatrix des Bildschirms dargestellt werden kann und sich hierbei das Pixelmuster direkt an der Seitenwand ergibt. Eine geeignete Pixelmatrix mit Leuchtpixels kann z.B. auf der OLED-Technologie (OLED - Organic Light Emitting Diode) oder der TFT-Technologie (TFT - Thin-Film Transistor) bereitgestellt werden.

Während das Ausbuchten einer Scheibe technisch zuverlässig realisiert werden kann, kann es Probleme beim korrespondierenden Ausbuchten einer Pixelmatrix geben, je nach verwendeter Technologie für die Leuchtpixel der Pixelmatrix. Eine Weiterbildung sieht deshalb vor, dass die Leuchtpixel des Bildschirms nicht mitausgebuchtet werden, sondern die Leuchtpixel des Bildschirms in einer zur Bezugsebene parallelen Pixelebene angeordnet sind. Mit anderen Worten ist nur die Scheibe, nicht aber die Pixelmatrix ausgebuchtet. Jetzt geht es darum, das Licht jedes einzelnen Leuchtpixels von diesem hin zu den Leuchtausgängen der Seitenwand des Bedienknaufs zu führen, als zu den Leuchtausgängen. Hierzu ist ein jeweiliger Leuchtausgang des Bedienknaufs also jeweils einer, mit jeweils zumindest einem der Leuchtpixel über einen Lichtleitelement, z.B. eine optische Faser oder eine Glasfaser, optisch gekoppelt. Mit einem Lichtleitelement kann also Licht eines Leuchtpixels hin zu einem Leuchtausgang geführt werden. Dies erfolgt insbesondere durch interne Reflexion, wie sie von einer Glasfaser bekannt ist. Mit anderen Worten ist in der Ausbuchtung der Scheibe ein Bündel von Lichtleitelementen angeordnet. Somit ist eine Standard-Pixelmatrix nutzbar, um auch die schräg angeordnete Seitenwand mit dem Pixelmuster zu beaufschlagen.

Erfindungsgemäß ist jedoch das zumindest eine Leuchtsegment oder die Pixelmatrix in den Körper hinein gewölbt oder bildet eine Außenfläche der Seitenwand. Mit anderen Worten kann der Körper z.B. aus einem transparenten Glas oder Kunststoff als gewölbte Scheibe oder hohle Form gefertigt und das zumindest eine Leuchtsegment oder die Pixelmatrix an einer Innenwand des Körpers angeordnet sein. Das zumindest eine Leuchtsegment oder die Pixelmatrix kann auch außen angeordnet sein. Die beiden Varianten vermeiden optische Verzerrungen eines Leuchtmusters oder Pixelmusters an der Seitenwand.

Bisher ist nur die Seitenwand des Bedienknaufs beschrieben worden. An der Vorderseite, also parallel zu der Bezugsebene an einer der Rückseite gegenüberliegenden Vorderseite des Bedienknaufs, ist bevorzugt eine frontale Anzeigefläche mit weiteren Leuchtausgängen zumindest eines weiteren Leuchtsegments oder der Pixelmatrix bereitgestellt. Somit ergibt sich also diese Anzeigefläche als eine parallel um die Knaufhöhe zur Bezugsebene versetzte Ebene, in welcher ebenfalls Leuchtausgänge angeordnet sind. Somit ist also versetzt zum beschriebenen Bildschirm ein in Bezug zu diesem kleinerer Bildschirm als Anzeigefläche auf der Vorderseite des Bedienknaufs bereitgestellt. Somit kann an der Vorderseite des Bedienknaufs ebenfalls eine mittels Pixeldaten einstellbare Anzeigefläche oder ein Anzeigeinhalt ausgegeben oder dargestellt werden.

Als weitere Besonderheit kann der Bedienknauf zum Erfassen einer Drehbewegung (Drehknauf) und/oder Schubbewegung (Schieberegler) und/oder Drückbewegung (Taste) zumindest eines den Bedienknauf bedienenden Fingers eine berührungssensitiv und/oder näherungssensitiv ausgestaltet Oberfläche an der Seitenwand aufweisen. Zu beachten ist, dass die Drehbewegung vor allem den zumindest einen Finger betrifft, während der Bedienknauf selbst aber dabei stillstehen kann. Die sensitive Oberfläche kann in an sich bekannter Weise mittels eines Sensorfelds gebildet sein, d.h. einer Touchpad-Sensor-Matrix. Es können beispielsweise kapazitive Näherungssensoren zum Bereitstellen der sensitiven Oberfläche vorgesehen sein, wie es bei einem Touchscreen bekannt ist. Auch die beschriebene frontale Anzeigefläche kann berührungssensitiv ausgestaltet sein.

Eine Steuereinrichtung der Bedienvorrichtung kann dazu eingerichtet sein, an der Seitenwand eine Gleitbewegung des zumindest einen Fingers mittels der berührungssensitiv und/oder näherungssensitiv ausgestalteten Oberfläche zu erfassen. Es wird also durch die Steuereinrichtung mittels der berührungssensitiven und/oder näherungssensitiven Oberfläche, d.h. mittels deren Sensorfeld, eine Gleitbewegung erkannt, wie sie entsteht, wenn der zumindest eine Finger über die Seitenwand streicht oder daran entlang geleitet. In Abhängigkeit von der Gleitbewegung wird ein Streckenwert ermittelt, der eine Verschiebebewegung oder Drehbewegung des zumindest einen Fingers bezüglich der Seitenwand beschreibt. Mit anderen Worten wird ermittelt, wie weit die Gleitbewegung entlang der Seitenwand durchgeführt wurde. In Abhängigkeit von dem Streckenwert kann dann z.B. das Pixelmuster auf der Seitenwand um diesen Streckenwert verschoben werden. Mit anderen Worten folgt das Pixelmuster der Gleitbewegung des Fingers. Im Zusammenhang mit einem Ring kann hierdurch beispielsweise auch bei einem starren Ring optisch das Drehen nachgeahmt werden.

Der Bedienknauf muss nicht unbedingt zylinderförmig oder kegelstumpfförmlich oder quaderförmig ausgestaltet sein. Eine Weiterbildung sieht vor, dass der Bedienknauf als Ring ausgestaltet ist. Die Seitenwand weist somit zwei Anteile auf, nämlich einen außenliegenden Anteil der Ringaußenwand und einen innenliegenden Anteil der Ringinnenwand des Ringes. Als frontale Anzeigefläche an der Vorderseite kann dann ein Kreis zwischen der Ringaußenwand und der Ringinnenwand vorhanden sein. Ein Ring weist den Vorteil auf, dass mittels einer berührungssensitiv und/oder näherungssensitiv ausgestalteten Oberfläche der Seitenwand zwischen einer Berührung an der Ringaußenwand und der Ringinnenwand unterschieden werden kann. So können mittels eines Bedienknaufs eine Drehbewegung und/oder Schubbewegung und/oder Drückbewegung an zwei unterschiedlichen Anteilen der Seitenwand erfasst werden und somit zwei unterschiedliche Funktionen gesteuert werden.

Alternativ zur Ausgestaltung als Ring kann vorgesehen sein, dass der Bedienknauf als eine Tastenleiste ausgestaltet ist. Mit Tastenleiste ist gemeint, dass die berührungssensitiv und/oder näherungssensitive ausgestaltete Oberfläche der Seitenwand in mehrere Tastfelder oder Tasten unterteilt ist. Somit kann ebenfalls mit einem einzelnen Bedienknauf die Bedienung mehrerer Funktionen gleichzeitig realisiert werden. Anstelle einer Leiste mit mehreren Tasten kann auch eine Leiste für einen Schieber vorgesehen sein.

Um die Auswahl an bedienbaren Funktionen auf mehr als zwei zu vergrößern, kann Folgendes vorgesehen sein. Hierzu ist die Steuereinrichtung zusätzlich dazu eingerichtet, die Gleitbewegung in einem Stellbereich der Seitenwand zu erfassen, beispielsweise der beschriebenen Ringinnenwand oder einer Seite der Tastenleiste. Hier wird dann also der Streckenwert eingestellt. Hierzu ist bevorzugt vorgesehen, in einem von den Stellbereich verschiedenen Auswahlbereich der Seitenwand eine weitere Gleitbewegung zu erfassen. Dies kann beispielsweise an der Ringaußenseite oder Ringaußenwand erfolgen oder an der Tastenleiste, quer über alle Tasten hinweg. In Abhängigkeit von dieser Gleitbewegung in dem Auswahlbereich wird aus mehreren Bedienunktionen eine ausgewählt oder aktiviert. Der Benutzer wählt also mittels einer Gleitbewegung im Auswahlbereich aus, welche Bedienfunktion er mittels des Bedienknaufs einstellen oder steuern möchte. In Abhängigkeit von der Gleitbewegung im Stellbereich wird dann der besagte Streckenwert als Einstellwert für die aktivierte Bedienfunktion eingestellt.

Ein Problem bei der Verwendung eines dreidimensional geformten Touchscreens kann eine fehlende Haptik sein, wie beispielsweise ein fehlendes Klicken sein, anhand welchem der Benutzer sich mit den Fingern daran orientieren kann, ob er den Bedienknauf erfolgreich betätigt hat. Hierzu ist deshalb gemäß einer Weiterbildung vorgesehen, dass die Steuereinrichtung dazu eingerichtet ist, in Abhängigkeit von zumindest einer erfassten Gleitbewegung einen Haptik-Aktuator der Bedienvorrichtung zum Erzeugen einer Erschütterung des Bedienknaufs anzusteuern. Diese Erschütterung kann ein Impuls oder eine Vibration sein. Hierdurch spürt der Benutzer ohne Hinschauen an dem zumindest einen Finger, ob er eine Bedieneingabe erfolgreich durchgeführt hat.

Die erfindungsgemäße Bedienvorrichtung kann zum Beispiel in einem Kraftfahrzeug bereitgestellt werden. Die Erfindung umfasst entsprechend auch ein Kraftfahrzeug mit einer Ausführungsform der erfindungsgemäßen Bedienvorrichtung. Das Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer perspektivischen Ansicht eines Bedienknaufs einer Bedienvorrichtung des Kraftfahrzeugs von Fig. 1;
- Fig. 3: eine schematische Darstellung einer Schnittansicht des Bedienknaufs von Fig. 2;
- Fig. 4: eine schematische Darstellung einer Schnittansicht einer alternativen nicht-erfindungsgemäßen Ausgestaltung des Bedienknaufs;
- Fig. 5: eine schematische Darstellung einer Schnittansicht einer weiteren alternativen Ausgestaltung des Bedienknaufs;
- Fig. 6: eine schematische Darstellung einer perspektivischen Ansicht eine Ausgestaltung des Bedienknaufs als Tastenleiste;
- Fig. 7: eine schematische Darstellung einer perspektivischen Ansicht der Tastenleiste von Fig. 6 während einer Bedienung;
- Fig. 8: eine schematische Darstellung einer Schnittansicht einer alternativen nicht-erfindungsgemäßen Ausgestaltung der Tastenleiste;
- Fig. 9: eine schematische Darstellung einer perspektivischen Ansicht einer Ausgestaltung des Bedienknaufs als Ring;
- Fig. 10: eine schematische Darstellung einer perspektivischen Ansicht des Rings von Fig. 9 während einer Bedienung;
- Fig. 11: eine schematische Darstellung einer perspektivischen Ansicht eines Bedienenknaufs, der als Ring ausgestaltet ist;
- Fig. 12: eine schematische Darstellung einer Schnittansicht des Rings von Fig. 11;
- Fig. 13: eine schematische Darstellung einer perspektivischen Ansicht eines Bedienknaufs mit Leuchtsegmenten; und
- Fig. 14: eine schematische Darstellung einer perspektivischen Ansicht eines Bedienknaufs, der Leuchtsegmente aufweist und als Tastenleiste ausgestaltet ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

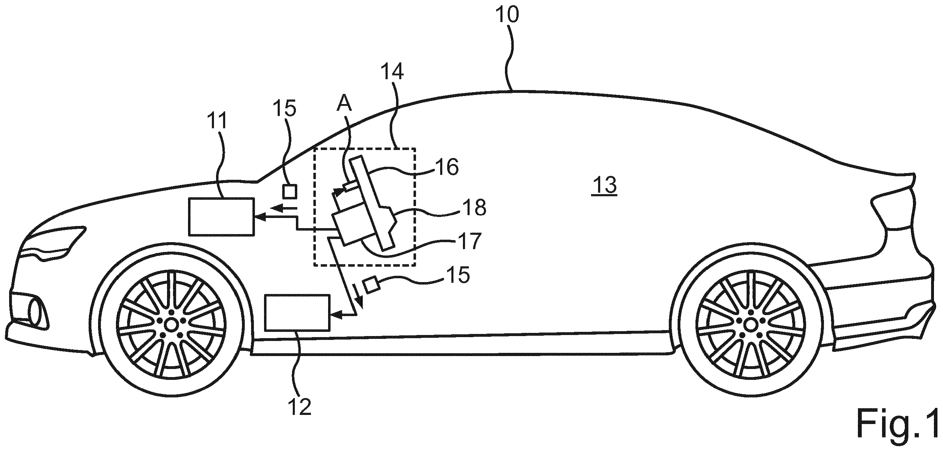

Fig. 1 zeigt ein Kraftfahrzeug 10, bei dem es sich um einen Kraftwagen, insbesondere einen Personenkraftwagen oder Lastkraftwagen, handeln kann. Das Kraftfahrzeug 10 kann eine oder mehrere Fahrzeugkomponenten 11, 12 aufweisen, die ein Benutzer des Kraftfahrzeugs 10 von einem Fahrzeuginnenraum 13 mittels einer Bedienvorrichtung 14 bedienen kann. Eine Fahrzeugkomponente 11 kann beispielsweise eine Klimatisierungseinrichtung für den Innenraum 13 sein. Eine weitere Fahrzeugkomponente 12 kann beispielsweise ein Gebläse und/oder eine Sitzmotorik sein. Mittels der Bedienvorrichtung 14 kann der Benutzer Steuersignale 15 zum Steuern der Fahrzeugkomponenten 11 erzeugen. Die Bedienvorrichtung 14 kann hierzu einen Touchscreen 16 aufweisen, an welchem der Benutzer eine Bedieneingabe durchführen kann. Die Bedieneingabe kann durch eine Steuervorrichtung 17 der Bedienvorrichtung 14 an dem Touchscreen 16 erfasst werden. In Abhängigkeit von der erfassten Bedieneingabe kann die Steuervorrichtung 17 die Steuersignale 15 erzeugen.

Bei der Bedienvorrichtung 14 muss der Benutzer aber nicht einfach an einem flachen Touchscreen 16 die Bedienung durchführen. Vielmehr ist dem Benutzer im Bereich des Touchscreens 16 ein Bedienknauf 18 zur Verfügung gestellt, den er mit den Fingern greifen kann, sodass er ein dreidimensionales integriertes Bedienelement, beispielsweise einen Drehregler oder Kipphebel, auf dem Touchscreen 16 bereitgestellt bekommt.

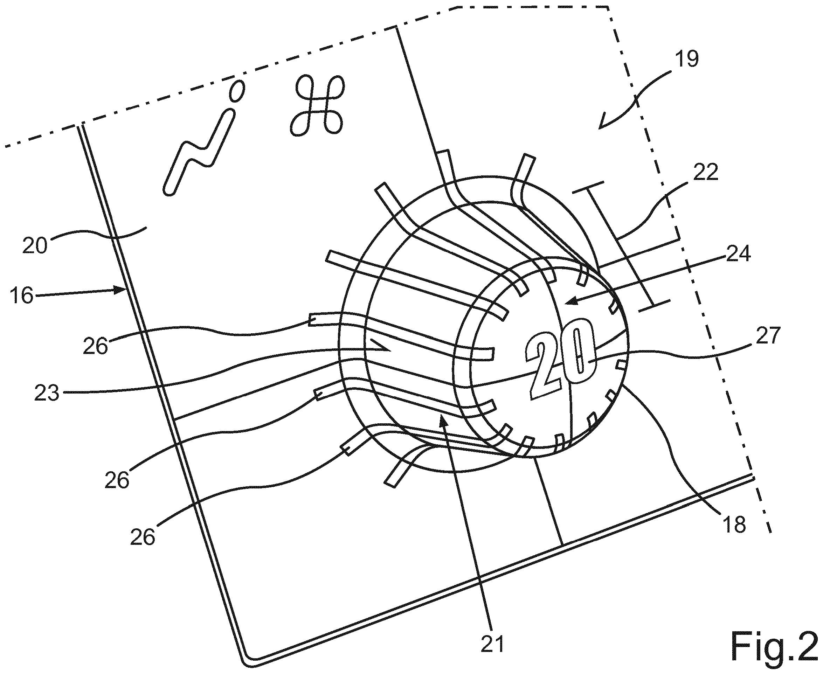

Fig. 2 veranschaulicht eine mögliche Ausgestaltung eines solchen Bedienknaufs 18. Ausgehend von einer Bezugsebene 19, die durch eine transparente Scheibe 20 des Touchscreens 16 gebildet ist, erhebt sich ein Körper 21 des Bedienknaufs 18 über die Bezugsebene 19 in den Innenraum 13 hinein bis zu einer Knaufhöhe 22. Somit weist der Körper 21 eine Seitenwand 23 und im Abstand der Knaufhöhe 22 parallel zur Bezugsebene 19 eine Vorderseite 24 auf. Eine Neigung der Seitenwand 23 bezüglich einer flächennormalen N der Scheibe 16 weist einen Winkel W auf, der bevorzugt in einem Bereich von 0° bis 70°, insbesondere 0° bis 45°, liegt.

Bei der Bedienvorrichtung 14 kann nun beispielsweise durch die Steuervorrichtung 17 nicht nur auf dem Touchscreen 16 selbst, sondern auch auf der Seitenwand 23 und optional an der Vorderseite 24 jeweils ebenfalls eine Pixelgrafik angezeigt werden. Diese kann durchgängig oder schlüssig mit der in dem Anzeigeinhalt auf dem Touchscreen 16 selbst ausgestaltet sein. In Fig. 2 ist beispielhaft veranschaulicht, wie ein Pixelmuster 26 in Form von Orientierungsmarken oder Symbolen oder Streifen an der Seitenwand 23 eine aktuelle virtuelle "Drehlage" des Bedienknaufs 18 visualisieren kann. Auf der Vorderseite 24 kann beispielsweise ein aktuell eingestellter Einstellwert 27 angezeigt werden.

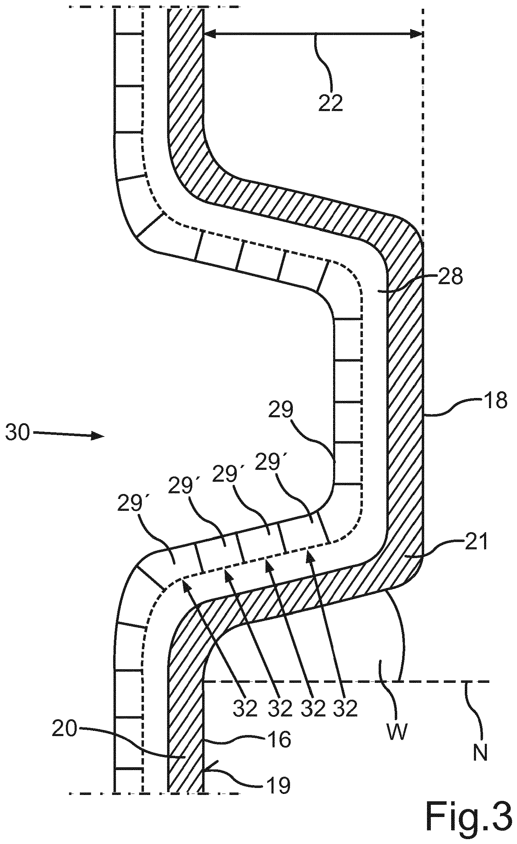

Fig. 3 veranschaulicht, wie der Knauf 18 in der Scheibe 20 des Touchscreens 16 bereitgestellt werden kann. Die Scheibe 20 kann beispielsweise durch Tiefziehen die Form des Bedienknaufs 18 aufweisen. Zusammen mit der Scheibe 20 können auch z.B. eine Sensormatrix 28 und insbesondere eine Pixelmatrix 29 mit einzeln ansteuerbaren Leuchtpixeln 29' ausgeformt oder eine Ausbuchtung 30 aufweisen. Der Übersichtlichkeit halber sind nur einige Leuchtpixel 29' mit einem Bezugszeichen versehen. Durch die Scheibe 20 hindurch können die einzelnen Pixelausgänge 32 der Leuchtpixel 29' optisch unterscheidbar sein.

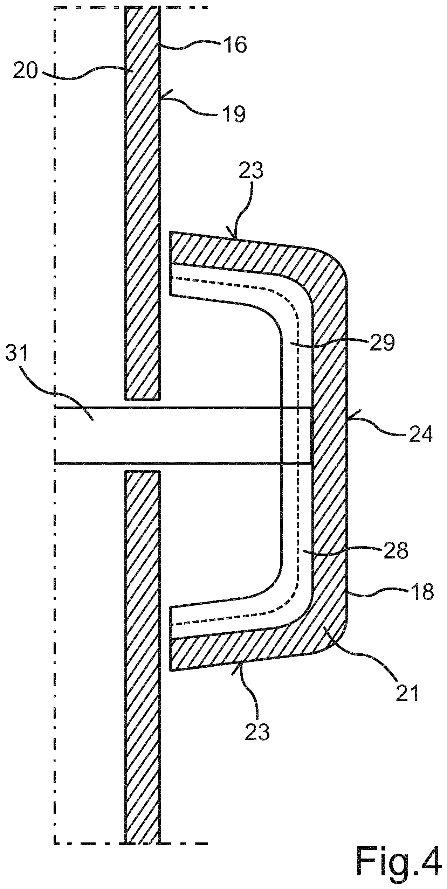

Fig. 4 veranschaulicht eine Ausführungsform, bei welcher der Bedienknauf 18 als separates Bauteil in den Touchscreen 16 integriert sein kann. Hierbei ist mittels einer mechanisch bewegbaren Lagerung 31, beispielsweise mittels einer Stange oder einer Achse, eine Relativbewegung des Bedienknaufs 18 bezüglich des Touchscreens 16 ermöglicht. In dem Bedienknauf 18 kann eine Pixelmatrix 29 bereitgestellt sein. Die Touchsensorik 28 kann insbesondere bei dieser Ausführungsform unterbleiben.

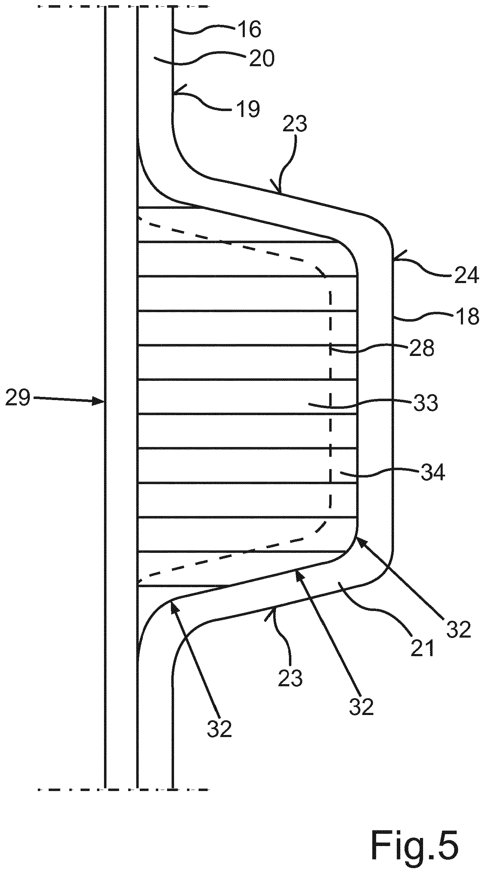

Fig. 5 veranschaulicht, wie nur die Scheibe 20 gebogen sein muss oder gekrümmt ausgestaltet sein muss, um den Bedienknauf 18 bereitzustellen. Die Pixelmatrix 29 kann flach, parallel zur Bezugsebene 19 ausgestaltet sein. Um zwischen einzelnen Leuchtpixeln der Pixelmatrix 29 und Pixelausgängen 32 des Bedienknaufs 18 das Licht einzelner Leuchtpixel führen zu können, sind Lichtleitelemente 33, beispielsweise Glasfasern, in einem Hohlraum 34 zwischen der Scheibe 20 und der Pixelmatrix 29 innerhalb des Knauf 18 angeordnet, durch deren Ausrichtung das Licht einzelner Leuchtpixel der Pixelmatrix 29 hin zu den Pixelausgängen 32 geführt wird.

Der Touchscreen 16 kann außerhalb des Bereichs des Bedienknaufs 18 ebenfalls eine gekrümmte Oberfläche aufweisen. Die Bezugsebene 19 stellt dann eine gedachte Tangentialebene der Scheibe im Bereich des Bedienknaufs 18 dar.

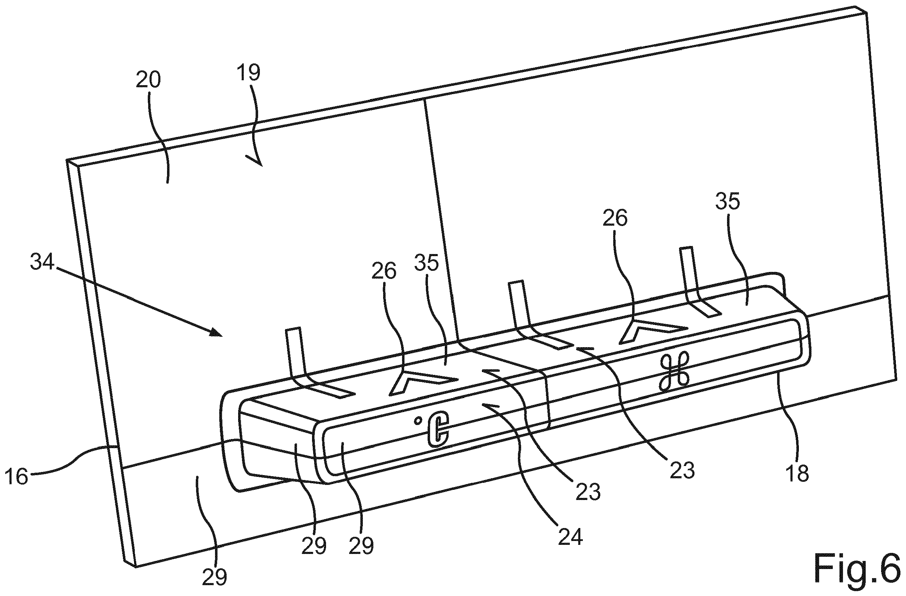

Fig. 6 veranschaulicht, wie alternativ zu einem Drehknauf eine Tastenleiste 34 als Bedienknauf 18 bereitgestellt werden kann. Die Tastenleiste 34 kann Kipphebel mit einzelnen, unabhängigen Tasten 35 nachbilden. Indem die Pixelmatrix 29 sich auch über die Seitenwand 23 erstreckt, können wechselnde oder austauschbare Symboliken als jeweiliges Pixelmuster 26 an der Seitenwand angezeigt werden.

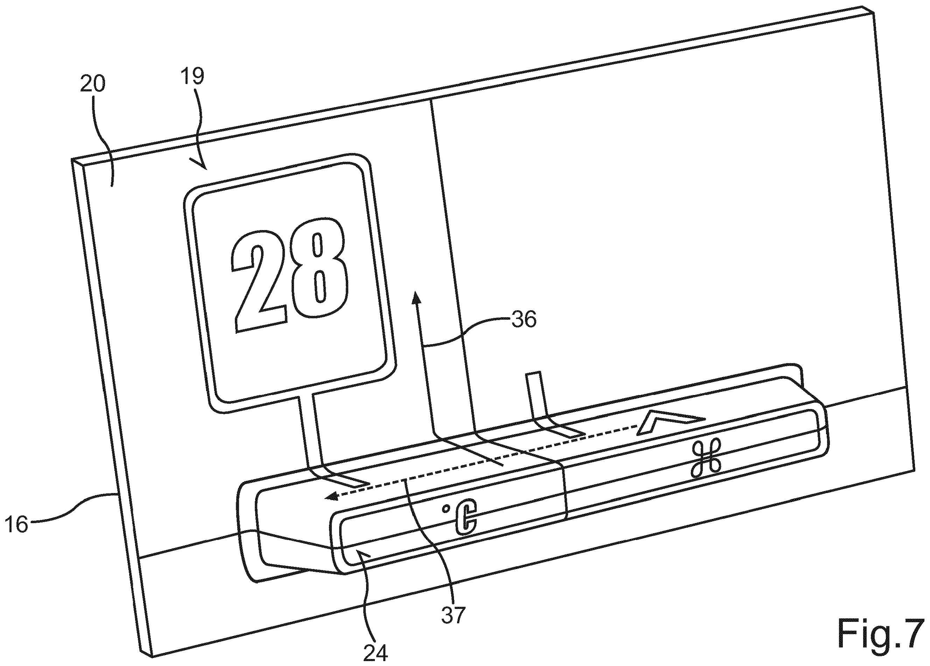

Fig. 7 veranschaulicht, wie zudem ermöglicht werden kann, bei Berühren eine Taste 35 (in Fig. 7 ist dies beispielhaft die linke Taste) eine Animation 36 bereitzustellen, durch die die ausgewählte Funktion aktiviert werden kann. Es kann auch vorgesehen sein, mehr Bedienfunktionen als Tasten 35 bereitzustellen, zwischen denen der Benutzer durch eine Wischbewegung oder Gleitbewegung 37 auswählen kann (sogenanntes Karussell). So können bei zwei Tasten 35, wie sie in Fig. 6 und Fig. 7 dargestellt sind, mehr als zwei Bedienfunktionen ausgewählt werden.

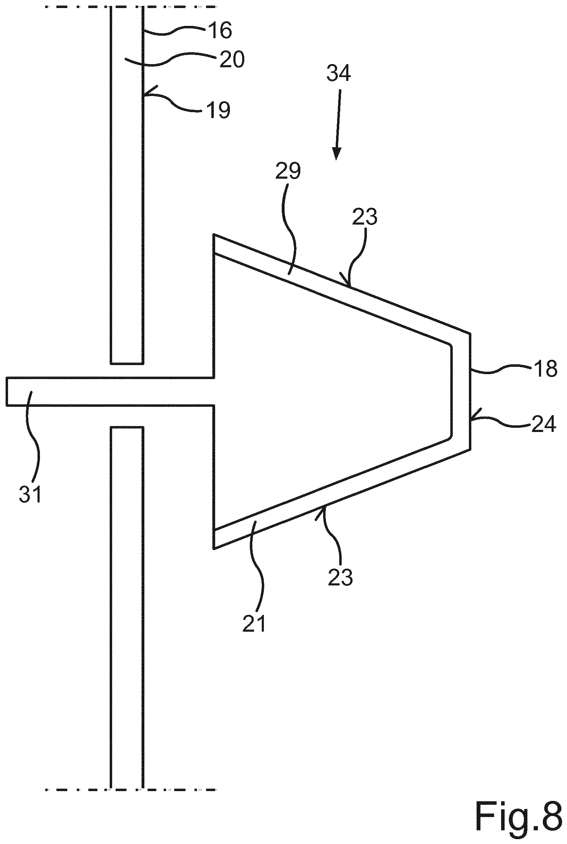

Fig. 8 veranschaulicht, wie die Tastenleiste 34 auch bewegbar ausgestaltet werden kann, indem (ähnlich wie im Fall des Bedienknaufs von Fig. 4) auch die Tastenleiste 34 an einer Achse oder einer Stange als Lagerung 31 mechanisch bewegbar gelagert ist. Hierbei ist dann eine Kippbewegung oder Hebelbewegung für die Tastenleiste 34 vorgesehen.

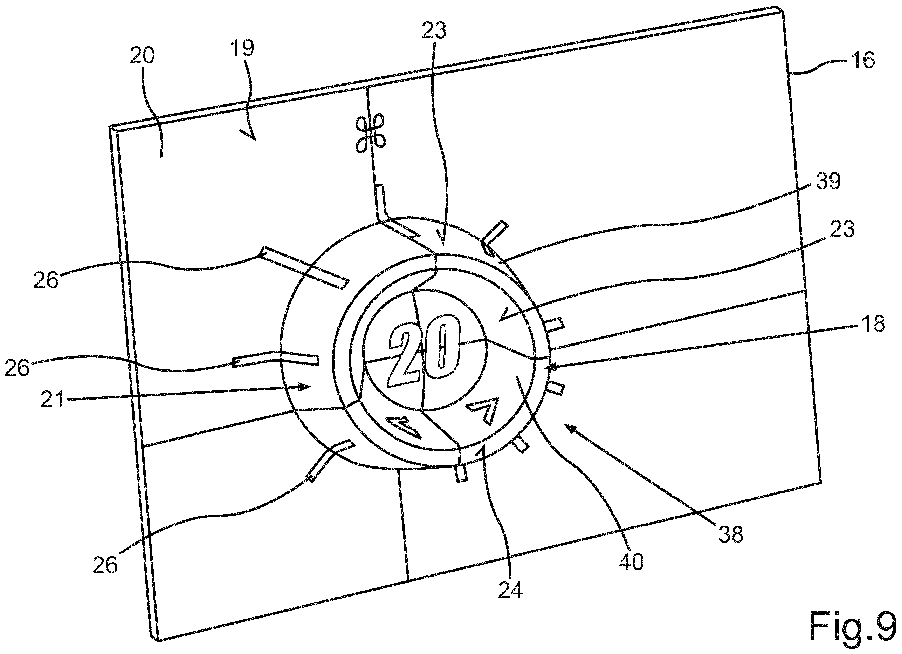

Fig. 9 veranschaulicht, wie der Bedienknauf 18 als Ring 38 ausgestaltet werden kann. Hierdurch ergibt sich eine Seitenwand 23 mit einer Ringaußenwand 39 und einer Ringinnenwand 40.

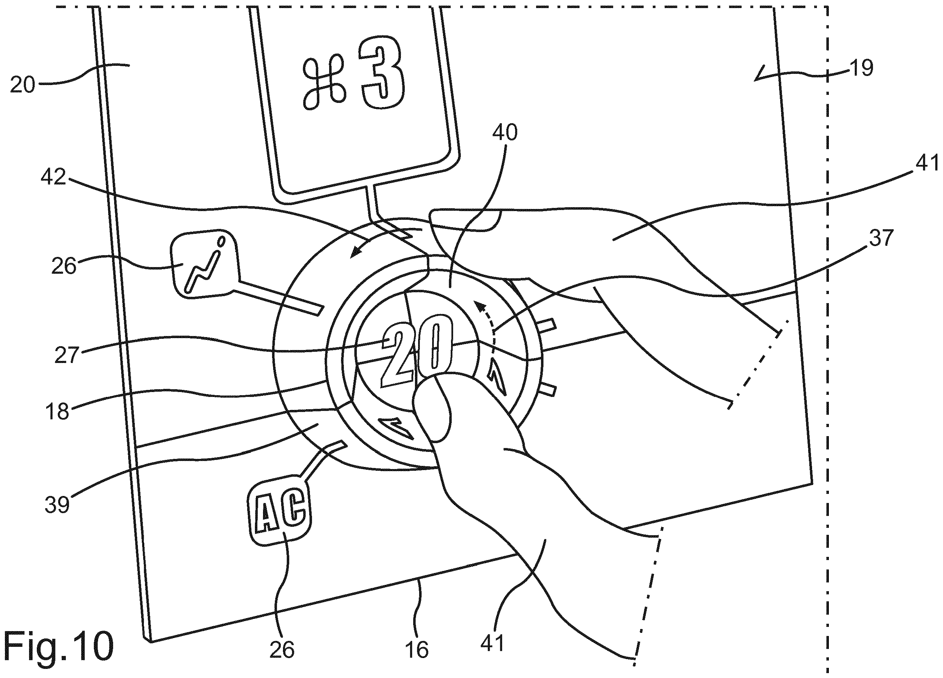

Fig. 10 veranschaulicht, wie hierdurch der Benutzer mit einem Finger 41 an der Ringaußenwand 39 eine Gleitbewegung 42 ausführen kann und hierdurch die einzustellende Funktion auswählt und dann an der Ringinnenwand 40 mit dem Finger 41 einen Einstellwert 27 der ausgewählten Funktion verändert oder einstellt. Die Ringaußenwand 39 stellt hierbei einen Auswahlbereich dar und die Ringinnenwand 40 einen Stellbereich.

Alternativ dazu kann für den Ring auch vorgesehen sein, zwei unterschiedliche Bedienfunktionen zugleich einzustellen, beispielsweise die Temperatur an der Ringinnenwand 40 und eine Gebläsestärke an der Ringaußenwand 39.

So ist bei der Bedienvorrichtung 14 ein Touchscreen 16 mit einer dreidimensionalen Form oder einem dreidimensionalen Körper 21 als Bedienknauf 18 bereitgestellt, dessen Form einem herkömmlichen mechanischen Bedienelement entsprechen kann, wie beispielsweise einem Drehregler, einer Kipptaste oder einem Drehring. Hierdurch kann der Benutzer dieses Bedienelement in Form des Bedienknaufs 18 auch ohne Hinsehen durch Ertasten im Kraftfahrzeug 10 finden und bedienen.

Der Bedienknauf 18 kann auch mit einem Haptik-Aktuator A gekoppelt werden, sodass durch Rütteln bei erkannter Bedienhandlung dem Benutzer ein haptisches Feedback vermittelt werden kann. Der Bedienknauf 18 mit Pixelmatrix 29 kann auch aus einem klassischen Bedienelement hergestellt werden, indem dieses mit einem 3D-Display überzogen werden kann und dann auf den Touchscreen 16 aufgesteckt werden kann, wie dies in Fig. 4 und Fig. 8 veranschaulicht ist.

Durch die Ertastbarkeit und Blindbedienbarkeit ergibt sich weniger Fahrerablenkung. Durch das einstückige Herstellen mit tiefgezogener Scheibe 20 ergeben sich auch geringere Maßketten, sodass Toleranzen mit geringerem technischen Aufwand eingehalten werden können. Durch das Anordnen des Bedienknaufs 18 im Touchscreen 16 ergibt sich auch eine platzsparende Bedienvorrichtung 14.

Pixelgrafiken können zudem nahtlos von dem 3D-Bedienelement des Bedienknaufs 18 zum flacheren Touchscreen 16 durchgehend dargestellt werden. Zudem ist eine Inszenierung durch den Touchscreen 16 möglich, in dem 3D-Formen im Touchscreen 16 animiert werden können, der Bedienknauf 18 seine Farbe oder allgemein sein Pixelmuster wechseln kann und auch die zugeordnete Funktion ausgetauscht werden kann. Als Pixelmuster kann beispielsweise eine Riffelung dargestellt werden, die sich gemäß der Gleitbewegung des Fingers auf der Oberfläche bewegt. Durch die Anpassbarkeit des Pixelmusters auf der Seitenwand kann der Bedienknauf 18 auch optisch angepasst werden an die aktive Bedienfunktion. So kann ein Klima-Drehregler ein anderes Aussehen erhalten als ein Radio-Drehregler.

Falls die Pixelmatrix 29 und die Touchmatrix 28 direkt an der Scheibe 20 des Touchscreens 16 angeordnet sind, kann der Bedienknauf 18 direkt als einstückige Ausbuchtung 30 an der Scheibe 20 ausgebildet werden, wie dies in Fig. 3 veranschaulicht ist. Hierdurch ergibt sich ein 3D-Touch-Display. Alternativ dazu kann, wie in Fig. 4 veranschaulicht, ein flaches oder gebogenes Hauptdisplay 16 oder ein Hauptbildschirm mit einem separaten Bedienknauf 18 als Bedienelement versehen werden, wobei dieser Bedienknauf 18 dann mit einer eigenen Pixelmatrix 29 überzogen oder ausgestaltet ist. Falls nur eine formbare Scheibe 20 zur Verfügung steht, wie dies in Fig. 5 veranschaulicht ist, kann ein flaches oder gebogenes Hauptdisplay 16 versehen mit einem 3D-Glas und Touchfolie vorgesehen werden. Der Zwischenraum 34 bis zur Pixelmatrix 29 kann mit Glasfaser 33 aufgefüllt werden, um die Leichtpixel 29' von der flachen Pixelmatrix 29 an die Oberfläche des Bedienknaufs optisch zu koppeln, um so die Leuchtausgänge 32 zu bilden.

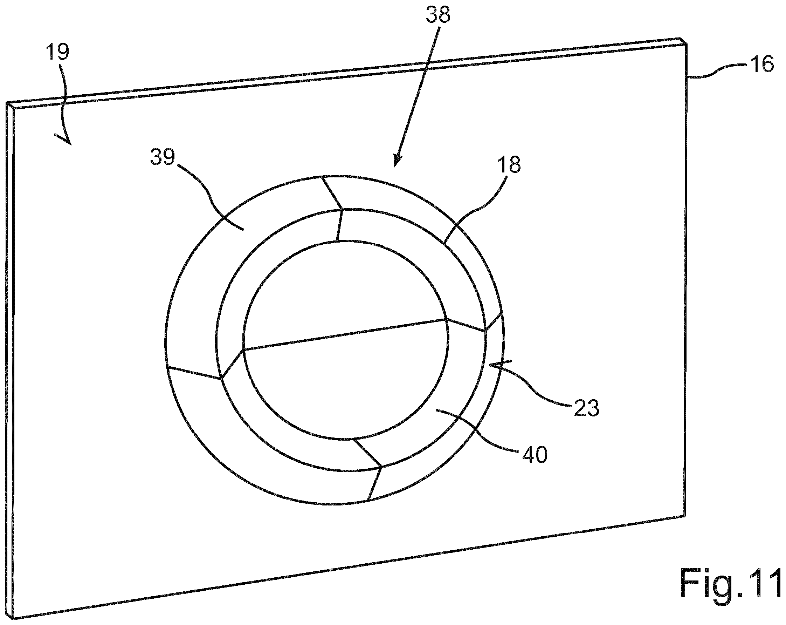

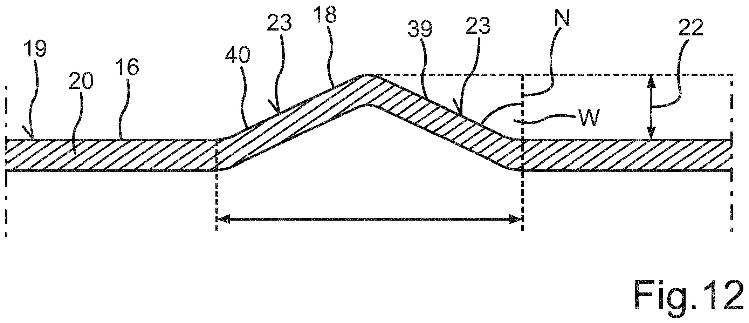

Fig. 11 zeigt einen Bedienknauf 18, der als flacher Ring 38 zum Beispiel auf einem Touchscreen ausgestaltet sein kann. Fig. 12 zeigt hierzu, dass die Knaufhöhe 22 im Verhältnis zur Ringsbreite derart ausgestaltet sein kann, dass der Winkel W in einem Bereich von 0° bis 70° liegen kann und die Knaufhöhe 22 in einem Bereich von 2 mm bis 5 mm.

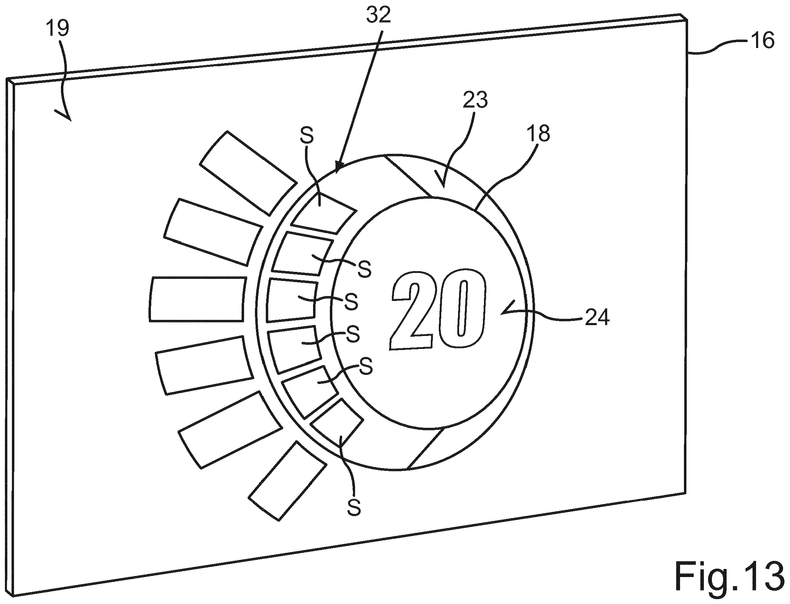

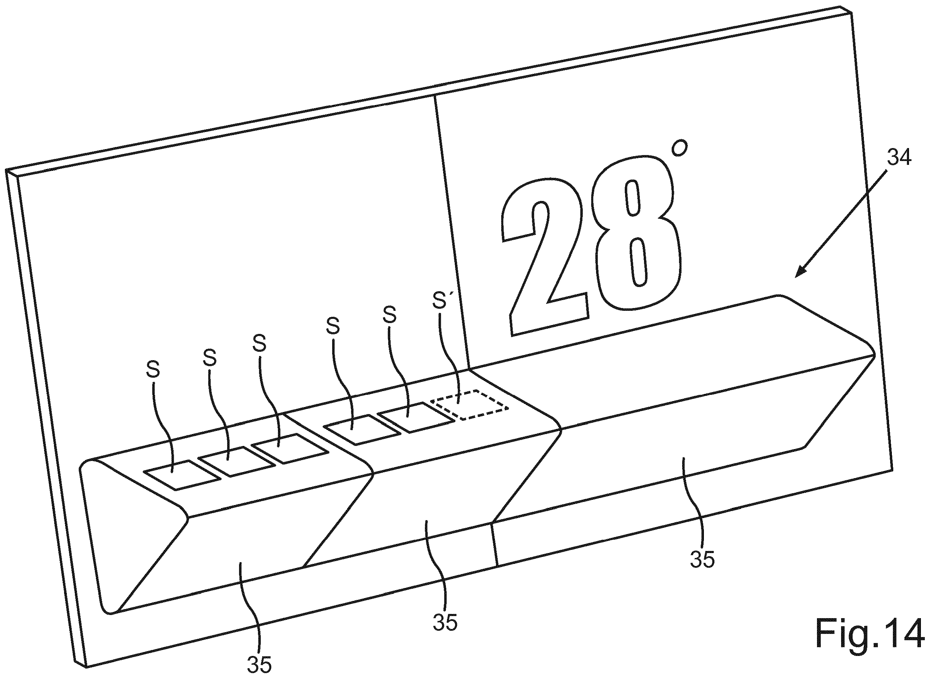

Fig. 13 veranschaulicht, wie anstelle einer Pixelmatrix an der Seitenwand 23 Leuchtsegmente S bereitgestellt sein können. Fig. 14 veranschaulicht hierzu, wie die Leuchtsegmenten S auf Tasten 35 einer Tastenleiste 34 bereitgestellt sein können. Durch Einschalten und Ausschalten einzelner Leuchtsegmenten S kann beispielsweise eine Schaltstufe eines Geräts veranschaulicht werden, wie dies bei einer der Tasten 35 der Fig. 14 durch zwei eingeschaltete Leuchtsegmente S und ein ausgestaltetes Leuchtsegment S' veranschaulicht ist.

Insgesamt zeigen die Beispiele, wie durch die Erfindung ein Touchdisplay mit integrierten 3D-Bedienformen bereitgestellt werden kann.

## Patentansprüche

1. Bedienvorrichtung (14) mit einem Bedienknauf (18), der sich bezüglich einer den Bedienknauf (18) an einer Rückseite begrenzenden Bezugsebene (19) als ein dreidimensional erhobener Körper (21) bis zu einer Knaufhöhe (22) von der Bezugsebene (19) weg erstreckt, wobei der Bedienknauf (18) zumindest eine sich zwischen der Bezugsebene (19) und der Knaufhöhe (22) in einem Winkel größer als 20° zur Bezugsebene (19) erstreckende Seitenwand (23) als Anlagefläche für zumindest einen den Bedienknauf (18) bedienenden Finger (41) aufweist, wobei die Knaufhöhe (22) größer als 0,5 cm ist und
an der Seitenwand (23) Leuchtausgänge (32) zumindest eines Leuchtsegments (S) oder einer Pixelmatrix (29) vorgesehen sind,
**dadurch gekennzeichnet, dass**
die Bezugsebene (19) durch eine den Bedienknauf (18) umgebende Außenoberfläche eines pixelbasierten Bildschirms (16) gebildet ist und die Außenoberfläche des Bildschirms (16) auf der Grundlage einer Glasscheibe (20) bereitgestellt ist und die Seitenwand (23) des Bedienknaufs (18) ebenfalls auf der Grundlage der Glasscheibe (20) bereitgestellt ist, indem die Glasscheibe (20) im Bereich des Bedienknaufs (18) eine Ausbuchtung (30) aufweist, die den dreidimensional erhobenen Körper (21) darstellt, wobei das zumindest eine Leuchtsegment (S) oder die Pixelmatrix (29) in den Körper (21) hinein gewölbt ist.

2. Bedienvorrichtung (14) nach Anspruch 1, wobei die Pixelmatrix (29) dazu eingerichtet sind, ein durch Pixeldaten vorgebbares Pixelmuster (26) an der Seitenwand (23) darzustellen.

3. Bedienvorrichtung (14) nach einem der vorhergehenden Ansprüche, wobei parallel zu der Bezugsebene (19) an einer der Rückseite des Bedienknaufs (18) gegenüberliegenden Vorderseite (24) des Bedienkaufs (18) eine um die Knaufhöhe (22) zur Bezugsebene (19) versetzte frontale Anzeigefläche (24) mit weiteren Leuchtausgängen zumindest eines weiteren Leuchtsegments (S) oder der Pixelmatrix (29) bereitgestellt ist.

4. Bedienvorrichtung (14) nach einem der vorhergehenden Ansprüche, wobei die Seitenwand (23) zum Erfassen einer Drehbewegung und/oder Schubbewegung und/oder Drückbewegung des zumindest einen Fingers (41) eine berührungssensitive und/oder näherungssensitive ausgestaltete Oberfläche aufweist und eine Steuereinrichtung (17) der Bedienvorrichtung (14) dazu eingerichtet ist, an der Seitenwand (23) eine Gleitbewegung (37, 42) des zumindest einen Fingers (41) zu erfassen und in Abhängigkeit von der Gleitbewegung (37, 42) einen Streckenwert einer Verschiebbewegung oder Drehbewegung des zumindest einen Fingers (41) bezüglich der Seitenwand (23) zu ermitteln.

5. Bedienvorrichtung (14) nach Anspruch 4, wobei der Bedienknauf (18) als eine Tastenleiste (34) ausgestaltet ist und die berührungssensitive und/oder näherungssensitve Oberfläche in mehrere Tasten (35) unterteilt ist.

6. Bedienvorrichtung (14) nach Anspruch 5, wobei der Bedienknauf (18) als Ring (38) ausgestaltet ist und die Seitenwand (23) einen außenliegenden Anteil an einer Ringaußenwand (39) und einen innenliegenden Anteil an einer Ringinnenwand (40) aufweist.

7. Bedienvorrichtung (14) nach Anspruch 6, wobei Steuereinrichtung (17) dazu eingerichtet ist, die Gleitbewegung (37, 42) in einem Stellbereich (40) der Seitenwand (23) zu erfassen und in einem von dem Stellbereich (40) verschiedenen Auswahlbereich (39) der Seitenwand (23) eine weitere Gleitbewegung zu erfassen und in Abhängigkeit von der Gleitbewegung in dem Auswahlbereich (39) aus mehreren Bedienfunktionen eine zu aktivieren und in Abhängigkeit von dem Streckenwert der Gleitbewegung im Stellbereich (40) einen Einstellwert (27) für die aktivierte Bedienfunktion einzustellen.

8. Bedienvorrichtung (14) nach einem der Ansprüche 4 bis 7, wobei die Steuereinrichtung (17) dazu eingerichtet ist, in Abhängigkeit von zumindest einer erfassten Gleitbewegung (37, 42) einen Haptik-Aktuator der Bedienvorrichtung (14) zum Erzeugen einer Erschütterung des Bedienknaufs (18) anzusteuern.

## Claims

1. Operating device (14) having an operating knob (18) which extends as a three-dimensional raised body (21) with regard to a datum plane (19), delimiting the operating knob (18) on a rear side, from the datum plane (19) until a knob height (22), wherein the operating knob (18) has at least one side wall (23), extending between the datum plane (19) and the knob height (22) at an angle of greater than 20° to the datum plane (19), as a bearing surface for at least one finger (41) operating the operating knob (18), wherein the knob height (22) is greater than 0.5 cm and
at the side wall (23) are provided light outlets (32) of at least one light segment (S) or of a pixel matrix (29),
**characterised in that**
the datum plane (19) is formed by an outer surface, surrounding the operating knob (18), of a pixel-based screen (16) and the outer surface of the screen (16) is provided on the foundation of a glass panel (20) and the side wall (23) of the operating knob (18) is also provided on the foundation of the glass panel (20), **in that** the glass panel (20) has in the region of the operating knob (18) a bulge (30) which represents the three-dimensional raised body (21), wherein the at least one light segment (S) or the pixel matrix (29) is domed into the body (21).

2. Operating device (14) according to claim 1, wherein the pixel matrix (29) are configured to represent on the side wall (23) a pixel pattern (26) which can be predetermined by pixel data.

3. Operating device (14) according to any of the preceding claims, wherein parallel to the datum plane (19) at a front side (24), opposite to the rear side of the operating knob (18), of the operating knob (18) is provided a frontal display surface (24), offset by the knob height (22) to the datum plane (19), having further light outlets of at least one further light segment (S) or of the pixel matrix (29).

4. Operating device (14) according to any of the preceding claims, wherein the side wall (23) has a touch-sensitively and/or approach-sensitively designed surface for detecting a rotational movement and/or pushing movement and/or pressing movement of the at least one finger (41) and a control apparatus (17) of the operating device (14) is configured to detect at the side wall (23) a gliding movement (37, 42) of the at least one finger (41) and depending on the gliding movement (37, 42) to determine a route value of a displacement movement or rotational movement of the at least one finger (41) in regard to the side wall (23).

5. Operating device (14) according to claim 4, wherein the operating knob (18) is designed as a button bar (34) and the touch-sensitive and/or approach-sensitive surface is divided into several buttons (35).

6. Operating device (14) according to claim 5, wherein the operating knob (18) is in the form of a ring (38) and the side wall (23) has an outer lying part on a ring outer wall (39) and an inner lying part on a ring inner wall (40).

7. Operating device (14) according to claim 6, wherein control apparatus (17) is configured to detect the gliding movement (37, 42) in an adjusting region (40) of the side wall (23) and in a selecting region (39), different from the adjusting region (40), of the side wall (23) to detect a further gliding movement and depending on the gliding movement in the selecting region (39) to activate one of several operating functions and depending on the route value of the gliding movement in the adjusting region (40) to set a setting value (27) for the activated operating function.

8. Operating device (14) according to any of claims 4 to 7, wherein the control apparatus (17) is configured depending on at least one detected gliding movement (37, 42) to control a haptic actuator of the operating device (14) to generate a shuddering of the operating knob (18).

## Revendications

1. Dispositif d'actionnement (14) avec un bouton d'actionnement (18), qui s'étend par rapport à un plan de référence (19) délimitant le bouton d'actionnement (18) au niveau d'une face arrière en tant que corps (21) surélevé de manière tridimensionnelle jusqu'à une hauteur de bouton (22) depuis le plan de référence (19), dans lequel le bouton d'actionnement (18) présente au moins une paroi latérale (23) s'étendant entre le plan de référence (19) et la hauteur de bouton (22) selon un angle supérieur à 20° par rapport au plan de référence (19) en tant que surface d'appui pour au moins un doigt (41) actionnant le bouton d'actionnement (18), dans lequel la hauteur de bouton (22) est supérieure à 0,5 cm et
des sorties d'éclairage (32) d'au moins un segment d'éclairage (S) ou d'une matrice de pixels (29) sont prévues au niveau de la paroi latérale (23),
**caractérisé en ce que**
le plan de référence (19) est formé par une surface extérieure entourant le bouton d'actionnement (18) d'un écran (16) à pixels et la surface extérieure de l'écran (16) est mise à disposition sur la base d'une vitre (20) et la paroi latérale (23) du bouton d'actionnement (18) est également mise à disposition sur la base de la vitre (20), par le fait que la vitre (20) présente dans la zone du bouton d'actionnement (18) un renflement (30), qui représente le corps (21) surélevé de manière tridimensionnelle, dans lequel l'au moins un segment d'éclairage (S) ou la matrice de pixels (29) est bombé dans le corps (21).

2. Dispositif d'actionnement (14) selon la revendication 1, dans lequel la matrice de pixels (29) sont aménagées pour représenter un motif de pixels (26) pouvant être prédéfini par des données de pixels au niveau de la paroi latérale (23).

3. Dispositif d'actionnement (14) selon l'une quelconque des revendications précédentes, dans lequel une surface d'affichage (24) frontale décalée par rapport au plan de référence (19) autour de la hauteur de bouton (22) avec d'autres sorties d'éclairage d'au moins un autre segment d'éclairage (S) ou de la matrice de pixels (29) est mise à disposition parallèlement au plan de référence (19) au niveau d'une face avant (24) du bouton d'actionnement (18) opposée à la face arrière du bouton d'actionnement (18).

4. Dispositif d'actionnement (14) selon l'une quelconque des revendications précédentes, dans lequel la paroi latérale (23) présente pour la détection d'un mouvement de rotation et/ou mouvement de poussée et/ou mouvement de pression de l'au moins un doigt (41) une surface réalisée sensible au toucher et/ou sensible à l'approche et un dispositif de commande (17) du dispositif d'actionnement (14) est aménagé pour détecter au niveau de la paroi latérale (23) un mouvement de glissement (37, 42) de l'au moins un doigt (41) et déterminer en fonction du mouvement de glissement (37, 42) une valeur de distance d'un mouvement de déplacement ou mouvement de rotation de l'au moins un doigt (41) par rapport à la paroi latérale (23).

5. Dispositif d'actionnement (14) selon la revendication 4, dans lequel le bouton d'actionnement (18) est réalisé en tant que barre de touches (34) et la surface sensible au toucher et/ou sensible à l'approche est subdivisée en plusieurs touches (35).

6. Dispositif d'actionnement (14) selon la revendication 5, dans lequel le bouton d'actionnement (18) est réalisé en tant que bague (38) et la paroi latérale (23) présente une part extérieure au niveau d'une paroi extérieure de bague (39) et une part intérieure au niveau d'une paroi intérieure de bague (40).

7. Dispositif d'actionnement (14) selon la revendication 6, dans lequel le dispositif de commande (17) est aménagé pour détecter le mouvement de glissement (37, 42) dans une plage de réglage (40) de la paroi latérale (23) et détecter un autre mouvement de glissement dans une plage de sélection (39) de la paroi latérale (23) différente de la plage de réglage (40) et d'activer une parmi plusieurs fonctions d'actionnement en fonction du mouvement de glissement dans la plage de sélection (39) et de régler une valeur de réglage (27) pour la fonction d'actionnement activée en fonction de la valeur de distance du mouvement de glissement dans la zone de réglage (40).

8. Dispositif d'actionnement (14) selon l'une quelconque des revendications 4 à 7, dans lequel le dispositif de commande (17) est aménagé pour commander un actionneur haptique du dispositif d'actionnement (14) pour la génération d'une vibration du bouton d'actionnement (18) en fonction d'au moins un mouvement de glissement (37, 42) détecté.
